Europäisches Patentamt

European Patent Office

Office européen des brevets

(19)

(11) **EP 1 302 759 A2**

## (12) EUROPEAN PATENT APPLICATION

(43) Date of publication:
16.04.2003 Bulletin 2003/16

(51) Int Cl.⁷: **G01J 5/00**

(21) Application number: 02022698.1

(22) Date of filing: 10.10.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: 11.10.2001 JP 2001314416

(71) Applicants:
• **NORITAKE CO., LIMITED**
**Nishi-ku, Nagoya-shi, Aichi-ken (JP)**
• **Kitagawa, Kuniyuki**
**Nagoya-shi, Aichi-ken (JP)**

(72) Inventors:
• **Hashimoto, Miyuki, c/o Noritake Co., Limited**
**Nagoya-shi, Aichi-ken (JP)**

• **Yano, Kenji, c/o Noritake Co., Limited**
**Nagoya-shi, Aichi-ken (JP)**
• **Iwata, Misao, c/o Noritake Co., Limited**
**Nagoya-shi, Aichi-ken (JP)**
• **Kitagawa, Kuniyuki**
**Chikusa-ku, Nagoya-shi, Aichi-ken (JP)**
• **Arai, Norio**
**deceased (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Temperature distribution measuring method and apparatus**

(57) Method and apparatus for measuring a surface temperature of an object body (12), by calculating a temperature at each local portion of an image of the object body, on the basis of a radiant intensity ratio at each pair of corresponding local portions of a first and a second image which are obtained by respective first and second photosensitive areas ($B_1$, $B_2$) of an image detector (32; 32'), which detect respective radiations having respective first and second wavelengths selected from a light emitted from the surface of the body, wherein the image detector is constructed such that each pair of mutually corresponding two photosensitive elements in the respective first and second photosensitive areas, which corresponds to each pair of mutually corresponding two local portions of the first and second images, has a percentage of difference in light sensitivity of not higher than 0.25%.

FIG. 5

EP 1 302 759 A2

## Description

This application is based on Japanese Patent Application No. 2001-314416 filed October 11, 2001, the contents of which are incorporated hereinto by reference.

## BACKGROUND OF THE INVENTION

Field of the Invention

The present invention relates to a method and an apparatus which permit accurate measurement of a distribution of surface temperature of an object made of a plurality of different materials the emissivity values of which are not known.

Discussion of Related Art

It is sometimes necessary to accurately measure a distribution of temperature, for example, a distribution of a surface temperature of an article placed within a firing or heating furnace, or a distribution of a surface temperature of a heat-generating body. There has been proposed a surface-temperature distribution measuring apparatus which uses an image sensor operable to obtain two images of an object body with respective two radiations of different wavelengths selected from an optical energy or light emitted from the object body. This measuring apparatus is arranged to obtain a ratio of radiant intensity values at each pair of corresponding local portions of the obtained two images, and measure the surface temperature of the object body, while utilizing the principle of measurement by a dichroic thermometer. JP-A-301569 discloses an example of such a surface-temperature distribution measuring apparatus. The apparatus disclosed in this publication uses two filters disposed within a thermally insulated vessel, so that an infrared radiation emitted from an object body is transmitted through the filters, whereby two radiations having respective different wavelengths corresponding two colors are obtained. The apparatus includes an infrared-radiation temperature-image processing device arranged to obtain a ratio of radiant intensity values at each pair of mutually corresponding two picture elements of respective two images corresponding to the two different wavelengths or colors, so that the temperature is calculated on the basis of the radiant intensity ratio, according to the principle of dichroism. The above-identified publication discloses the use of two mirrors which are pivoted to permit the incident infrared radiation to be selectively incident upon the two filters, for sequentially obtaining the respective two radiations so that the corresponding two infrared-radiation images of the object body are sequentially obtained by the processing device. The above-identified publication also discloses a technique of using two infrared-radiation temperature-image processing devices operable to concurrently obtain the two infrared-radiation images. It is considered possible to use a single photosensitive device having a light detecting surface which have respective different areas in which two images of the object body are formed concurrently with respective infrared radiations having respective different wavelengths.

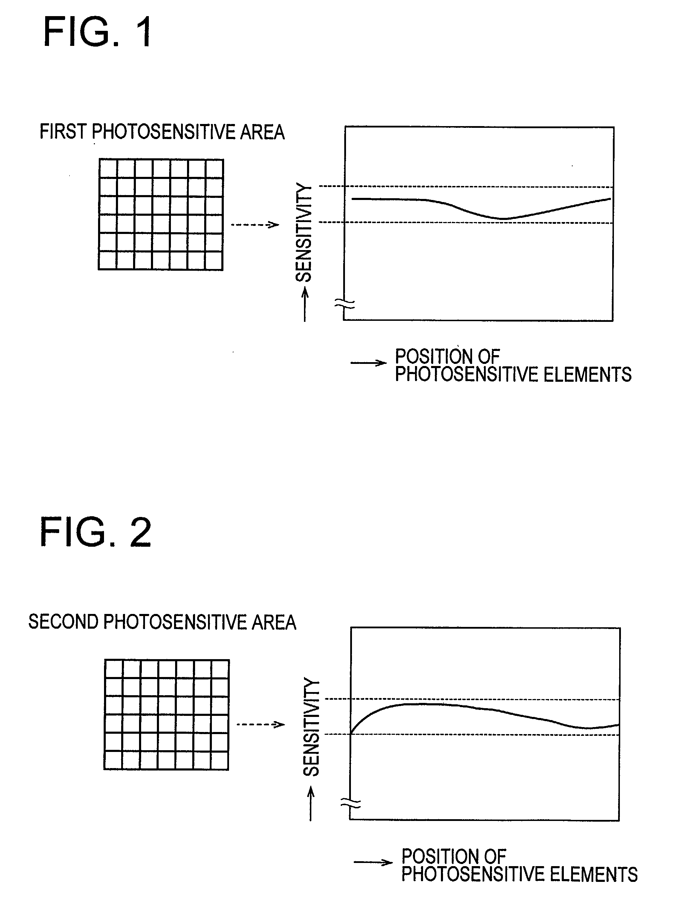

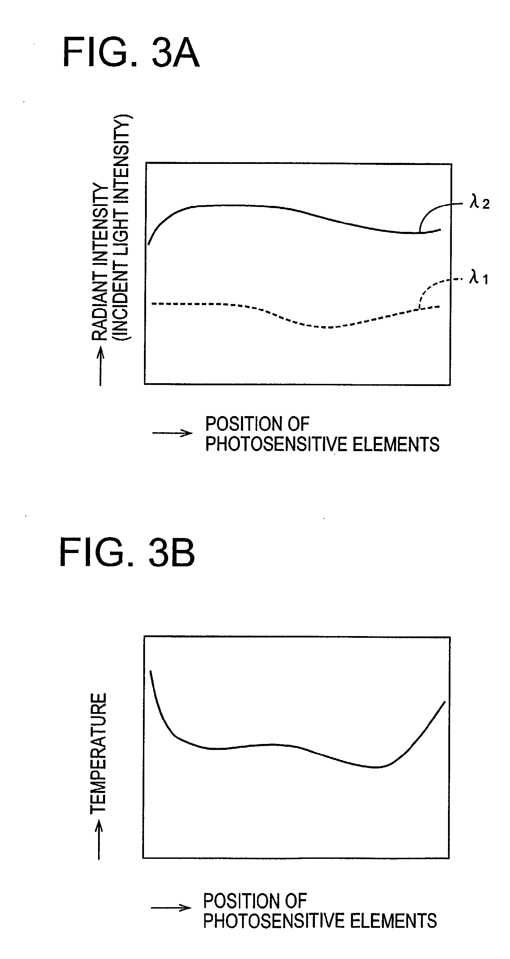

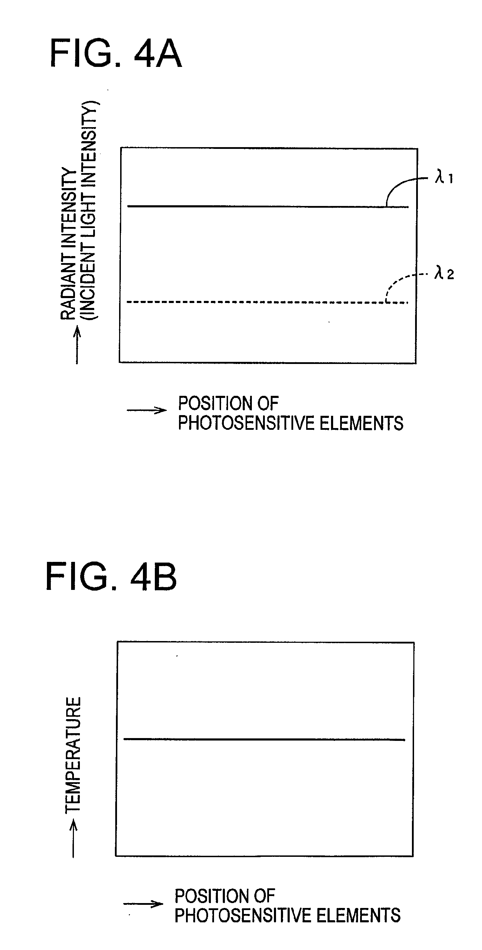

In the conventional temperature distribution measuring apparatus as described above, the distribution of the surface temperature of the object body is measured by calculating a temperature of the object body at each picture element of its image on the basis of a radiant intensity ratio at each pair of mutually corresponding two picture elements of two images which are obtained by respective groups of photosensitive elements, which detect the respective two radiations having respective two different wavelengths. However, the individual photosensitive elements corresponding to the respective picture elements of the image have different light sensitivity values. Even if a percentage of difference in light sensitivity of photosensitive elements of a photosensitive device commercially available is held within a commercially tolerable range of about $\pm0.8$-$1.0\%$, the temperature calculated on the basis of the radiant intensity ratio at each pair of mutually corresponding two picture elements of the respective two images may undesirably have a variation which is considerably larger or smaller than the tolerable percentage of difference in the light sensitivity of the individual photosensitive elements. For instance, the photosensitive device has a first photosensitive area and a second photosensitive area which have respective two groups of photosensitive elements used to detect the respective two radiations of respective two different wavelengths, as illustrated in Figs. 1 and 2. Even if a certain row of the photosensitive elements arranged in the first photosensitive area has a light sensitivity variation within a commercially tolerable range indicated by broken lines in Fig. 1, while the corresponding row of the photosensitive elements in the second photosensitive area has a light sensitivity variation within a commercially tolerable range indicated by broken lines in Fig. 2, the radiant intensity values of the two radiation of the first and second wavelengths may have different variations depending upon different distributions of the light sensitivity values of the two rows of photosensitive elements, as indicated in Fig. 3A, although the radiant intensity values of the radiations incident upon the photosensitive elements are sufficiently high. Accordingly, the temperature values as calculated on the basis of the ratios of the radiant intensities of the different wavelengths may have an intolerably large amount of variation, as indicated in Fig. 3B. In this respect, it is noted that Fig. 4A indicates the radiant intensity values of the first and second wavelengths where the photosensitive elements in each of the first and second photosensitive areas have the same light sensitivity value, while Fig. 4B indicates a temperature distribution calculated on the basis of the ratios of the radiant intensity values of the first and second wavelengths in the case of Fig. 4A.

SUMMARY OF THE INVENTION

The present invention was made in view of the background art discussed above. It is a first object of the present invention to provide a method which permits accurate measurement of a distribution of surface temperature of an object body. A second object of the invention is to provide an apparatus suitable for practicing the method.

The first object may be achieved according to a first aspect of this invention, which provides a method of measuring a surface temperature of an object body, by calculating a temperature of the object body at each local portion of its image on the basis of a radiant intensity ratio at each pair of mutually corresponding two local portions of a first image and a second image which are obtained by respective first and second photosensitive areas of an image detector, which detect respective first and second radiations which have respective first and second wavelengths and which are selected from a light emitted from a surface of the object body, the method comprising steps of obtaining the first and second images of the object body respectively by the first and second photosensitive areas of the image detector which are constructed such that each pair of mutually corresponding two photosensitive elements in the first and second photosensitive elements, which corresponds to each pair of mutually corresponding two local portions of the respective first and second images, has a percentage of difference in light sensitivity of not higher than 0.25%.

The second object indicated above may be achieved according to a second aspect of the present invention, which provides an apparatus for measuring a surface temperature of an object body, by calculating a temperature of the object body at each local portion of its image on the basis of a radiant intensity ratio at each pair of mutually corresponding two local portions of a first and a second image which are obtained by respective first and second photosensitive areas of an image detector, which detect respective first and second radiations which have respective first and second wavelengths and which are selected from a light emitted from a surface of said object body, said first photosensitive area having a plurality of first photosensitive elements arranged to obtain said first image of said object body with said first radiation having said first wavelength, while said second photosensitive area having a plurality of second photosensitive elements arranged to obtain said second image of said object body with said second radiation having said second wavelength, characterized in that the image detector is constructed such that each pair of mutually corresponding first and second photosensitive elements in the first and second photosensitive areas, which corresponds to each pair of mutually corresponding two local portions of the respective first and second images of the object body, has a percentage of difference in light sensitivity of not higher than 0.25%, where the percentage of difference is represented by $[(S_1 - S_2)/S_0] \times 100$, where "$S_0$", "$S_1$" and "$S_2$" respectively represent an average light sensitivity of all of the first plurality of photosensitive elements and the second plurality of photosensitive elements, and light sensitivity values of the first and second photosensitive elements of the above-indicated each pair.

In the method and apparatus of the invention as described above, the first and second images and of the object body are respectively obtained with the first and second radiations which have the respective first and second wavelengths and which are selected from the light emitted from the surface of the object body. These first and second radiations are respectively obtained by the respective first and second photosensitive areas and of the image detector, which are constructed such that each pair of mutually corresponding first and second photosensitive elements in the respective first and second photosensitive areas, which corresponds to each pair of mutually corresponding two local portions of the respective first and second images has a percentage of difference in light sensitivity of not higher than 0.25%. The temperature of the object body is calculated on the basis of the ratio of the radiant intensity values of the first and second radiations at each pair of mutually corresponding two local portions of the first and second images. Since the percentage of difference in the light sensitivity of each pair of mutually corresponding first and second photosensitive elements corresponding to each pair of mutually corresponding two local portions is adjusted to a value as low as not higher than 0.25% according to the present invention, the distribution of the surface temperature of the object body can be measured with high accuracy according to the present invention.

The surface temperature measuring apparatus constructed according to one preferred form of the second aspect of this invention described above comprises a first filter and a second filter. The first filter is operable to select the first radiation having the first wavelength from the light emitted from the surface of the object body, such that the first filter permits transmission therethrough of the first radiation having the first wavelength which is selected according to a radiant-intensity curve corresponding to a wavelength of a black body at a lower limit of a range of the temperature to be measured, and which is within a high radiant intensity range in which the radiant intensity is higher than a radiant intensity at a normal room temperature. The first filter permits the first radiation to be transmitted therethrough to the first photosensitive area. On the other hand, the second filter is operable to select the second radiation having the second wavelength from the light emitted from the surface of the object body, such that the second filter permits transmission therethrough of the second radiation having the second wavelength which is selected within the high radiant intensity range, such that the second wavelength is different from the first wavelength by a predetermined difference which is not larger than 1/12 of the first wavelength and which is not smaller than a sum of a half width of the first wavelength and a half width of the second wavelength. The second filter permits the second radiation to be transmitted therethrough to the second photosensitive area. The present preferred form of the apparatus is arranged to calculate the temperature of the object body at each local portion of its image, on the basis of the radiant intensity ratio at each pair of mutually corresponding two picture elements of the first and second images and obtained with the respective first and second radiations of the first and second wavelengths selected from the light emitted from the surface of the object body. Thus, the distribution of the surface temperature of the object body is measured on the basis of the temperature at each picture element. To select the first radiation having the first wavelength from the light emitted from the surface of the object body, the apparatus according to the present preferred form of the invention uses the first filter which permits transmission therethrough of the radiation having the first wavelength which is selected according to the radiant-intensity curve corresponding to the wavelength of the black body at the substantially lower limit of the range of the temperature to be measured, and which is within the high radiant intensity range in which the radiant intensity is higher than the background radiant intensity at the normal room temperature. The apparatus further uses the second filter which permits transmission therethrough of the second radiation having the second wavelength which is selected within the above-indicated high radiant intensity range, such that the second wavelength is different from the first wavelength by the predetermined difference which is not larger than 1/12 of the first wavelength and which is not smaller than the sum of the half width of the first wavelength and the half width of the second wavelength. Accordingly, optical signals having sufficiently high radiant intensities can be obtained, leading to an accordingly high S/N ratio of the image detector. In addition, the first and second wavelengths are close to each other, so that the principle of measurement of the present optical system fully matches the principle of measurement of a dichotic thermometer, namely, fully meets a prerequisite that the dependency of the emissivity on the wavelength can be ignored for the two radiations the wavelengths of which are close to each other, leading to approximation $\varepsilon_1 = \varepsilon_2$. Thus, the present measuring apparatus permits highly accurate measurement of the temperature distribution.

In the method and apparatus of the present invention, the first and second filters are preferably arranged such that the first filter permits transmission therethrough of a radiation having the half width which is not larger than 1/20 of the first wavelength, while the second filter permits transmission therethrough of the radiation having the half width which is not larger than 1/20 of the second wavelength. According to this arrangement, the first and second radiations having the first and second wavelengths are considered to exhibit a sufficiently high degree of monochromatism. Therefore, the present invention meets the prerequisite for the principle of measurement by a dichroic thermometer, resulting in improved accuracy of measurement of the temperature distribution.

The first and second filters used in the method and apparatus of the invention are preferably arranged such that the first and second filters have transmittance values whose difference is not higher than 30%. This arrangement assures high sensitivity and S/N ratio, even for one of the two radiations of the first and second wavelengths which has a lower luminance value, permitting accurate measurement of the temperature distribution.

BRIEF DESCRIPTION OF THE DRAWINGS

The above and other objects, features, advantages and technical and industrial significance of the present invention will be better understood by reading the following detailed description of presently preferred embodiment of the invention, when considered in connection with the accompanying drawings, in which:

Fig. 1 is view illustrating a variation in light sensitivity of photosensitive elements in a first photosensitive area of an image detector for detecting a first wavelength radiation, in relation to the position of the photosensitive elements;
Fig. 2 is a view illustrating a variation in the light sensitivity of the photosensitive elements in a second photosensitive area of the image detector for detecting a second wavelength radiation, in relation to the position of the photosensitive elements;
Fig. 3A is a view showing radiant intensity values of the first and second wavelengths detected in the first and second photosensitive areas of Figs. 1 and 2, which vary with the position of the photosensitive elements, while Fig. 3B is a view indicating a temperature distribution calculated on the basis of a ratio of the radiant intensity values of the first and second wavelengths;
Fig. 4A is a view showing the radiant intensity values of the first and second wavelengths where the photosensitive elements in each of the first and second photosensitive areas have the same light sensitivity irrespective of the position of the photosensitive elements, while Fig. 4B is a view indicating a temperature distribution calculated on the basis of ratios of the radiant intensity values of the first and second wavelengths in the case of Fig. 4A;
Fig. 5 is a view schematically illustrating an arrangement of a temperature distribution measuring apparatus constructed according to one embodiment of this invention;

Fig. 6 is a view for explaining a manner of determining wavelengths $\lambda_1$ and $\lambda_2$ of respective first and second filters shown in Fig. 5;

Fig. 7 is a view for explaining first and second images $G_1$ and $G_2$ formed on a light detecting surface 26 of an image detector 32 shown in Fig. 5;

Fig. 8 is a view indicating a relationship between a percentage of difference in light sensitivity values of two photosensitive elements corresponding two picture elements of the first and second images G1 and G2, and an error of temperature measurement on the basis of output signals of the two photosensitive elements;

Fig. 9 is a flow chart for explaining a relevant part of a control operation performed by an arithmetic control device shown in Fig. 5;

Fig. 10 is a view indicating a relationship used in a picture-element temperature calculating step of Fig. 9, to obtain a surface temperature T from a radiant intensity ratio R;

Fig. 11 is a view indicating a relationship used in a temperature-distribution displaying step of Fig. 9, to determine a display color from the surface temperature T;

Figs. 12A and 12B are views showing data obtained by experimentation where the corresponding two photosensitive elements have a percentage of difference in light sensitivity of not higher than 0.25%, Fig. 12 A indicating the radiant intensity values of the first and second wavelengths varying with the position of the photosensitive element, while Fig. 12B indicating the temperature distribution calculated on the basis of a ratio of the two radiant intensity values, in relation to the position of the photosensitive elements;

Figs. 13A and 13B are views showing data obtained by another experimentation where the corresponding two photosensitive elements have a percentage of difference in light sensitivity of higher than 0.25%, Fig. 13A indicating the radiant intensity values of the first and second wavelengths varying with the position of the photosensitive elements, while Fig. 13B indicating the temperature distribution calculated on the basis of a ratio of the two radiant intensity values, in relation to the position of the photosensitive elements;

Fig. 14 is a view corresponding to that of Fig. 5, illustrating an optical system of a temperature distribution measuring apparatus according to another embodiment of this invention;

Fig.15 is a view corresponding to that of Fig.5, illustrating an optical system of a temperature distribution measuring apparatus according to a further embodiment of this invention; and

Fig. 16 is a view corresponding to that of Fig. 5, illustrating an optical system of a temperature distribution measuring apparatus according to a still further embodiment of this invention.

DETAILED DESCRIPTION OF THE PREFERRED EMBODIMENTS

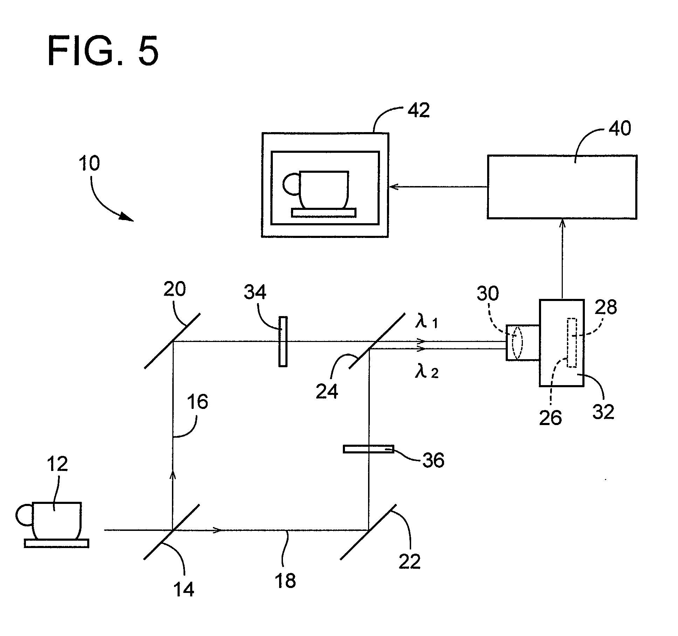

Referring to first to Fig. 5, there is shown an arrangement of a temperature distribution measuring apparatus 10 constructed according to a first embodiment of this invention, wherein a light emitted from a surface of an object body 12 being heated within a firing furnace or a heating furnace is split by a half mirror (beam splitter) 14 into a first component traveling along a first optical path 16 and a second component traveling along a second optical path 18. The first and second optical paths 16, 18 are bent substantially at right angles by respective mirrors 20, 22, so that the first and second components are both incident upon a half mirror 24, and are reflected by the half mirror 24, so as to be incident upon an image detector 32 which has a CCD device 28 and a lens device 30. The CCD device 28 has a light detecting surface 26 on which there are arranged a multiplicity of photosensitive elements. The lens device 30 is arranged to focus images of the object body 12 on the light detecting surface 26.

The first optical path 16 is provided with a first filter 34 which permits transmission therethrough a radiation having a first wavelength (band) $\lambda_1$ (e.g., center wavelength of 600nm) and a half width of about 10nm, for example. The second optical path 18 is provided with a second filter 36 which permits transmission therethrough a radiation having a second wavelength (band) $\lambda_2$ (e.g., center wavelength of 650nm) and a half width of about 10nm, for example. The first and second filers 34, 36 are so-called "interference filters" permitting transmission of radiations in selected wavelength bands, utilizing an optical interference.

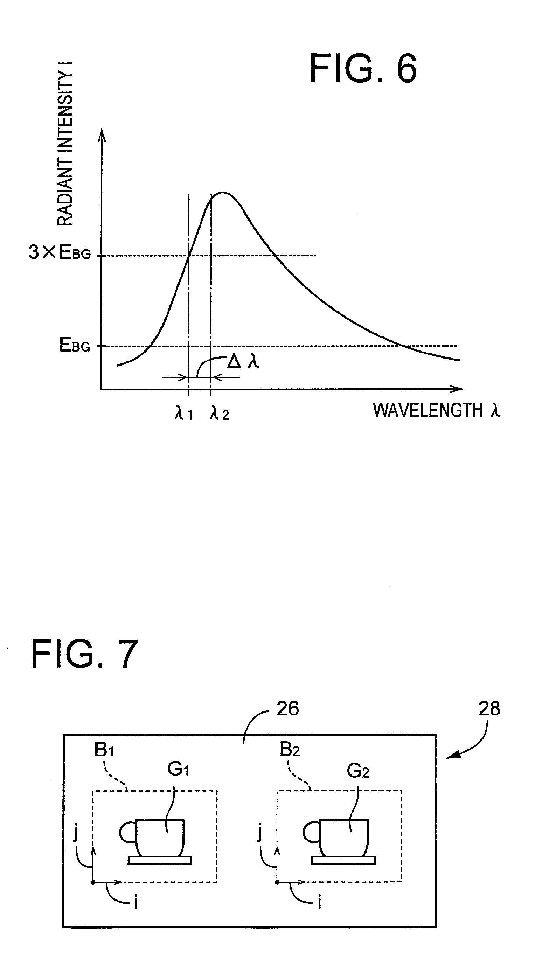

The first and second wavelengths $\lambda_1$ and $\lambda_2$ are determined in the following manner, for instance. Initially, there is obtained according to the Planck's law a relationship between a wavelength and a radiant intensity of a black body at a lower limit (e.g., 500°C) of a range of the temperature to be measured. Namely, a curve L1 shown in Fig. 6 is obtained. Then, a background radiant intensity $E_{BG}$ of the object body 12 is measured at a room temperature, for example, at 25°C. Next, the wavelength $\lambda$ at a desired point which lies on a portion of the curve L1 and which is larger than the background radiant intensity $E_{BG}$ multiplied by three, that is, larger than a value 3 x $E_{BG}$ is determined to be the first wavelength $\lambda_1$, so that the radiant intensity used for the measurement is high enough to prevent an error of measurement of the temperature. Then, the second wavelength is $\lambda_2$ determined to be larger or smaller than the first wavelength $\lambda_1$ by a predetermined difference $\Delta\lambda$, which is not larger than 1/12 of the first wavelength $\lambda_1$. Where the first wavelength $\lambda_1$ is 600nm, for example, the second wavelength $\lambda_2$ is determined to be 65nm, which is larger than the first wavelength $\lambda_1$ by 50nm (which is the predetermined difference $\Delta\lambda$). This manner of determination of the first and second wavelengths $\lambda_1$

and $\lambda_1$ is intended to satisfy an approximating equation (1) which represents the principle of measurement of a dichroic thermometer, which will be described. It is noted that the difference $\Delta\lambda$ between the first and second wavelengths $\lambda_1$ and $\lambda_2$ must be equal to or larger than a half width determined as described below, in order to maintain a high degree of accuracy of measurement of the radiant intensity. For the radiations of the first and second radiations $\lambda_1$ and $\lambda_2$ to maintain properties of a monochromic light, the half widths must be equal to or smaller than 1/20 of the center wavelengths, for example, equal to or smaller than about 20nm. Further, the first and second filters 34, 36 have transmittance values whose difference is 30% or lower. If the difference were higher than 30%, the sensitivity of one of the two radiations of the first and second wavelengths $\lambda_1\lambda_2$ which has a lower luminance value would be lowered, resulting in a reduced S/N ratio of the image detector 32 and an accordingly reduced accuracy of display of the temperature.

Thus, the temperature distribution measuring apparatus 10 according to the present embodiment is arranged to select the two radiations having the respective first and second wavelengths $\lambda_1$ and $\lambda_2$ from the light emitted from the surface of the object body 12. To this end, the first filter 34 permits transmission therethrough the radiation having the first wavelength $\lambda_1$ and the first half width which is not larger than 1/20 of that wavelength. The first wavelength $\lambda_1$ is selected according to the radiant-intensity curve L1 corresponding to the wavelength of a black body at the lower limit of the range of the temperature to be measured, and within a high radiant intensity range in which the radiant intensity is sufficiently higher than the background radiant intensity $E_{BG}$ at a normal room temperature. On the other hand, the second filter 26 permits transmission therethrough the radiation having the second wavelength $\lambda_2$ and the second half width which is not larger than 1/20 of the second wavelength. The second wavelength $\lambda_2$ is selected within the above-indicated high radiant intensity range, such that the second wavelength $\lambda_2$ is different from the first wavelength $\lambda_1$ by a predetermined difference which is not larger than 1/12 of the first wavelength $\lambda_1$ and which is not smaller than a sum of the above-indicated first and second half widths.

In the optical system of Fig. 5, portions of the first and second optical paths 16, 18 between the half mirror 24 and the image detector 32 are spaced from each other by a small distance in a direction parallel to the light detecting surface 26 of the CCD device 28, in order to prevent overlapping of first and second images $G_1$ and $G_2$ formed on the light detecting surface 26. This spaced-apart relation of the optical paths 16, 18 is established by suitably orienting the respective mirrors 20, 22, so that the first and second images $G_1$ and $G_2$ of respective different wavelengths are formed on the light detecting surface 26 in a spaced-apart relation with each other. Described in detail by reference to Fig. 7,

the first image $G_1$ is formed at a first position $B_1$ (in a first photosensitive area $B_1$) on the light detecting surface 26 of the CCD device 28 of the image detector 32, by the radiation having the first wavelength $\lambda_1$ selected by the first filter 34 from the light emitted from the surface of the object body 12, while the second image $G_2$ is formed at a second position $B_2$ (in a second photosensitive area $B_2$) on the light detecting surface 26, by the radiation having the second wavelength $\lambda_2$ selected by the second filter 36 from the light emitted from the surface of the object body 12, such that the first and second positions $B_1$ and B2 are spaced apart from each other in the direction parallel to the light detecting surface 26, as indicated in Fig. 7. According to this arrangement, the photosensitive elements arranged in the first photosensitive area $B_1$ on the light detecting surface 26 detect the radiant intensity values at respective picture elements of the first image $G_1$, while the photosensitive elements arranged in the second photosensitive area $B_2$ on the light detecting surface 26 detect the radiant intensity values at respective picture elements of the second image $G_2$, such that the picture elements of the images $G_1$ and $G_2$ correspond to the respective photosensitive elements in the first and second photosensitive areas $B_1$ and $B_2$. The mirrors 20, 22, half mirrors 14, 24 and lens device 30 cooperate with each other to constitute an optical imaging device capable of performing first and second wavelength-selecting steps of selecting the first and second wavelengths for concurrently forming respective images of the object body 12 at respective positions.

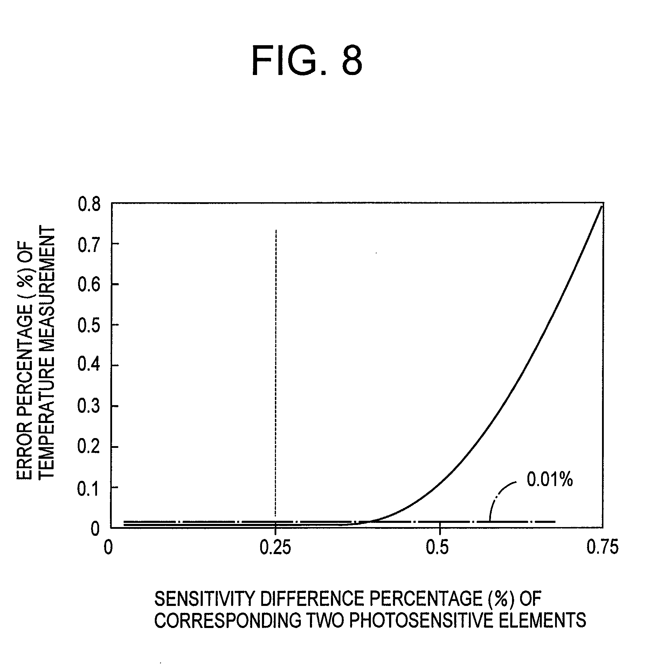

The multiple first photosensitive elements arranged in the first photosensitive area $B_1$ and the multiple second photosensitive elements arranged in the second photosensitive area $B_2$ are constructed such that each first photosensitive element in the first photosensitive area $B_1$ and each second photosensitive element in the second photosensitive area $B_2$, which correspond to each pair of mutually corresponding two picture elements of the first and second images $G_1$ and $G_2$, have a percentage of difference in light sensitivity of not higher than 0.25%. Namely, the first and second photosensitive areas $B_1$ and $B_2$ of the image detector 32 are constructed such that each pair of mutually corresponding first and second photosensitive elements in the respective first and second photosensitive areas, which corresponds to each pair of mutually corresponding two picture elements of the respective first and second images $G_1$ and $G_2$, have a percentage of difference percentage in light sensitivity of not higher than 0.25%. An error percentage (%) of a temperature measured by the present temperature distribution measuring apparatus 10 and the percentage (%) of difference in the light sensitivity of the above-indicated corresponding first and second photosensitive elements in the first and second photosensitive areas $B_1$ and $B_2$ have a relationship as indicated in Fig. 8. It will be understood from Fig. 8 that the error percentage of the temperature measurement starts to increase at a high rate, after the light sensitivity difference percentage of the corresponding two photosensitive elements has exceeded a value considerably higher than the above-indicated upper limit of 0.25%. In other words, the first and second photosensitive areas $B_1$ and $B_2$ of the light detecting surface 26 of the CCD device 28 of the image detector 32 are arranged so that the temperature measurement error percentage is considerably smaller than 0.01% with the light sensitivity difference percentage being kept 0.25% or lower. The light sensitivity difference percentage of the corresponding two photosensitive elements is defined as $[(S_1-S_2)/S_0]$ x 100, while the error percentage of the temperature measurement is defined as $[|T_0 - T|/100$, where "$S_0$", "$S_1$" and "$S_2$" respectively represent an average light sensitivity of all of the photosensitive elements of the CCD device 28, and light sensitivity values of the corresponding two photosensitive elements in the first and second photosensitive areas $B_1$, $B_2$, while "T" and "$T_0$" respectively represent a temperature value measured by the present apparatus 10 and a true temperature value.

The arithmetic control device 40 is a so-called microcomputer incorporating a central processing unit (CPU), a random-access memory (RAM), a read-only memory (ROM) and an input-output interface. The CPU operates according to a control program stored in the ROM, to process input signals, namely, the output signals of the multiple photosensitive elements arranged on the light detecting surface 26, and control an image display device 42 to display a distribution of the surface temperature of the object body 12.

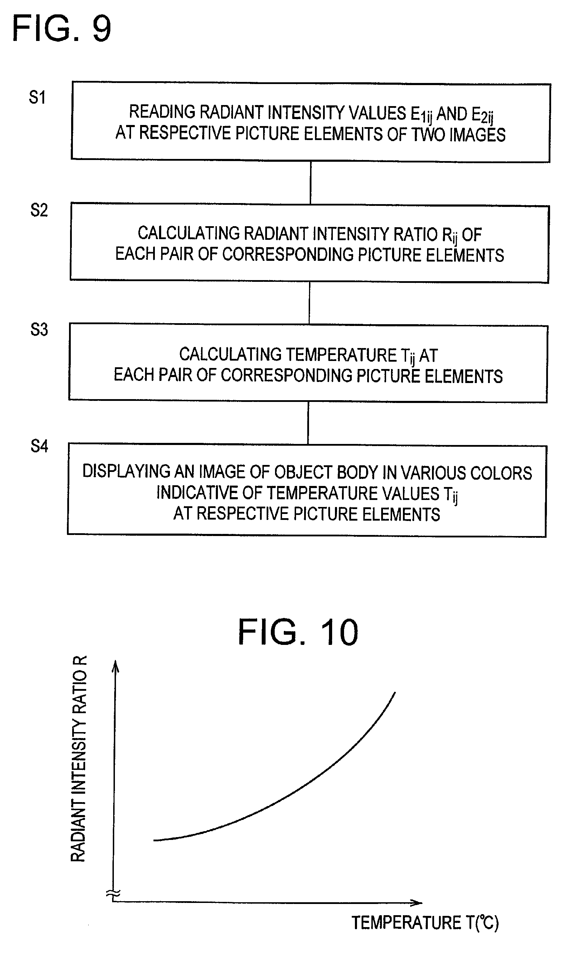

Referring to the flow chart of Fig. 9, there will be described a relevant portion of a control operation of the arithmetic control device 40. The control operation is initiated with step S1 to read the output signals of the multiple photosensitive elements arranged on the light detecting surface 26, for obtaining radiant intensity values $E_{1ij}$ at the respective picture elements of the first image $G_1$, and radiant intensity values $E_{2ij}$ at the respective corresponding picture elements of the second image $G_2$. Then, the control flow goes to step S2 corresponding to a radiant intensity ratio calculating step or means, to calculate a radiant intensity ratio $R_{ij}$ (= $E_{1ji}/E_{2ij}$) at each pair of corresponding picture elements of the first and second images $G_1$ and $G_2$ which are formed at the respective first and second positions $B_1$ and $B_2$ on the light detecting surface 26. The radiant intensity ratio $R_{ij}$ is a ratio of the radiant intensity value $E_{1ji}$ of the first wavelength $\lambda_1$ detected by the photosensitive element at each picture element of the first image $G_1$, to the radiant intensity value $E_{2ji}$ of the second wavelength $\lambda_2$ detected by the photosensitive element at the corresponding picture element of the second image $G_2$. Then, step S3 corresponding to a picture-element temperature calculating step or means is implemented to calculate a temperature $T_{ij}$ at each picture element of the image of the object body 12, on the basis of the calculated actual radiant intensity ratio $R_{ij}$ at each pair of corresponding picture elements of the first and second images $G_1$, $G_2$, and according to a predetermined relationship between the radiant intensity R and the temperature T as shown in Fig. 10, by way of example. Data representative of the predetermined relationship are stored in the ROM. For instance, the relationship as shown in Fig. 10 may be represented by the following equation 1, which is an approximating equation representing the principle of measurement of a dichroic thermometer. The equation 1 is formulated to permit determination of the surface temperature T of the object body 12 on the basis of the ratio R of the radiant intensity values at the respective different wavelengths $\lambda_1$ and $\lambda_2$, without having to use the emissivity of the object body 12. In the following equations, the second wavelength $\lambda_2$ is larger than the first wavelength $\lambda_1$, and "T", "$C_1$" and "$C_2$" respectively represent the absolute temperature, and first and second constants of Planck's law of radiation.

$$\text{(Equation 1)}$$

$$R = (\lambda_2/\lambda_1)^5$$

$$\exp[(C_2/T).(1/\lambda_2 - 1/\lambda_1)]$$

The above equation 1 is obtained in the following manner. That is, it is known that an intensity (energy) Eb of a radiation of a wavelength $\lambda$ emitted from a unit surface area of a black body for a unit time, and the wavelength satisfy the following equation 2, which is the Planck's equation. It is also known that the following equation 3, which is the Wien's approximating equation, is satisfied when $\exp(C_2/\lambda T) \gg 1$. For ordinary bodies having gray colors, the following equation 4 is obtained by converting the equation 3 with insertion of the emissivity $\varepsilon$. The following equation 5 is obtained from the equation 4, for obtaining the ratio R of the radiant intensity values $E_1$ and $E_2$ of the two wavelength values $\lambda_1$ and $\lambda_2$. Where the two wavelength values $\lambda_1$ and $\lambda_2$ are close to each other, the dependency of the emissivity $\varepsilon$ on the wavelength can be ignored, that is, $\varepsilon_1 = \varepsilon_2$. Thus, the above equation 1 is obtained. Accordingly, the temperatures T of object bodies having different emissivity values $\varepsilon$ can be obtained without an influence of the emissivity.

$$\text{(Equation 2)}$$

$$Eb = C_1/\lambda^5[\exp(C_2/\lambda T) - 1]$$

$$\text{(Equation 3)}$$

$$Eb = C_1 \exp(-C_2/\lambda T)/\lambda^5$$

(Equation 4)

$$E = \varepsilon \cdot C_1 \, \exp(-C_2/\lambda T)/\lambda^5$$

(Equation 5)

$$E = (\varepsilon_1/\varepsilon_2)(\lambda_2/\lambda_1)^5$$

$$\exp[(C_2/T) \cdot (1/\lambda_2 - 1/\lambda_1)]$$

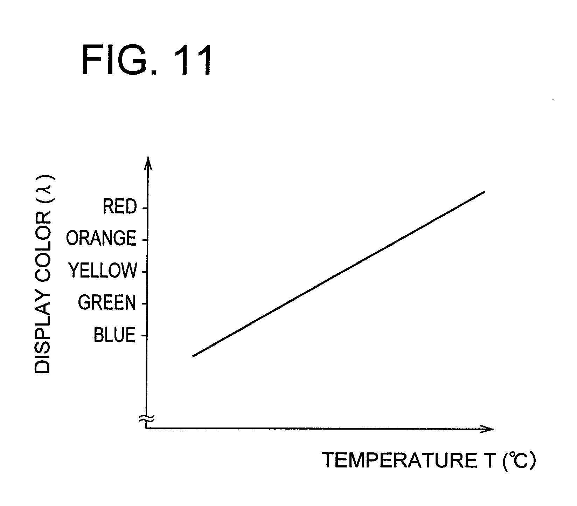

After the temperature $T_{ij}$ at each picture element of the image of the object body 12 has been calculated in step S3 as described above, the control flow goes to step S4 corresponding to a temperature-distribution displaying step or means, to display a distribution of the surface temperature of the object body 12, on the basis of the temperature $T_{ij}$ calculated at each picture element, and a predetermined relationship between the temperature $T_{ij}$ and the display color. Data representative of the predetermined relationship are stored in the ROM. Fig. 11 shows an example of the predetermined relationship between the temperature $T_{ij}$ and the display color. In this case, the distribution of the surface temperature of the object body 12 is shown in predetermined different colors.

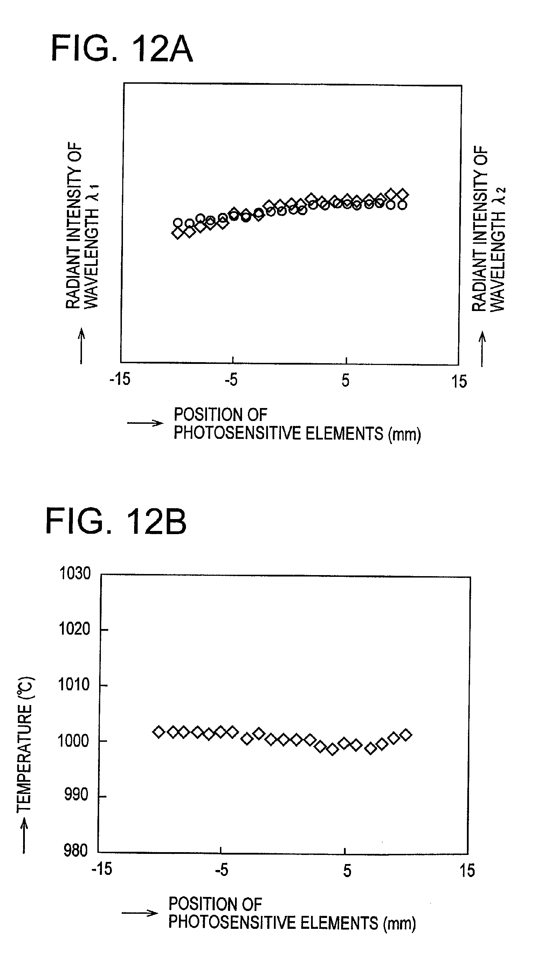

There will be described an experimentation conducted by the present inventors, using the optical system shown in Fig. 5 wherein a CCD camera (model ST-7 available from Santa Barbara Instrument Group) equipped with a telephoto lens (AF Zoom Nikkor ED 70-300mm, F4-5.6 available from Nippon Kougaku Kabushiki Kaisha, Japan) is employed as the CCD device 28 of the image detector 32, and the half mirrors 14, 24 are half mirrors for a visible radiation, which reflect 30% of an incident radiation and transmit 30% of the incident radiation. The CCD camera is constructed such that each photosensitive element in the first photosensitive area $B_1$ and each photosensitive element in the second photosensitive area $B_2$ which correspond to each pair of corresponding two picture elements of the first and second images $G_1$ and $G_2$ have a difference percentage in light sensitivity of not higher than 0.25%, so that the radiant intensities in the first photosensitive area $B_1$ corresponding to the first wavelength $\lambda_1$ are sufficiently close to those in the second photosensitive area $B_2$ corresponding to the second wavelength $\lambda_2$, as indicated in Fig. 12A The mirrors 20, 22 are plane mirrors BK7 of aluminum available from Sigma Kouki, Japan. In this optical system, the first filter 34 permits transmission therethrough a radiation having a wavelength of 600nm and a half width of 10nm, while the second filter 36 permits transmission therethrough a radiation having a wavelength of 650nm and a half width of 10nm. The object body 12 used in the experimentation is an alumina substrate (50 x 50 x 0.8mm). This object body 12 was placed in a central part of a heating furnace, and the temperature within the furnace was raised from the room temperature up to 1000°C at a rate of 10°C/min. The distribution of the surface temperature of the alumina substrate was measured after the temperature within the furnace was held at 1000°C for one hour. The experimentation under the conditions described above indicated revealed the measurement of a surface temperature distribution of 1000°C±1°C of the alumina substrate, as indicated in Fig. 12B. The accuracy of this temperature distribution measurement was improved to ±0.1% of the true temperature as represented by the output of a thermocouple provided to detect the temperature within the heating furnace.

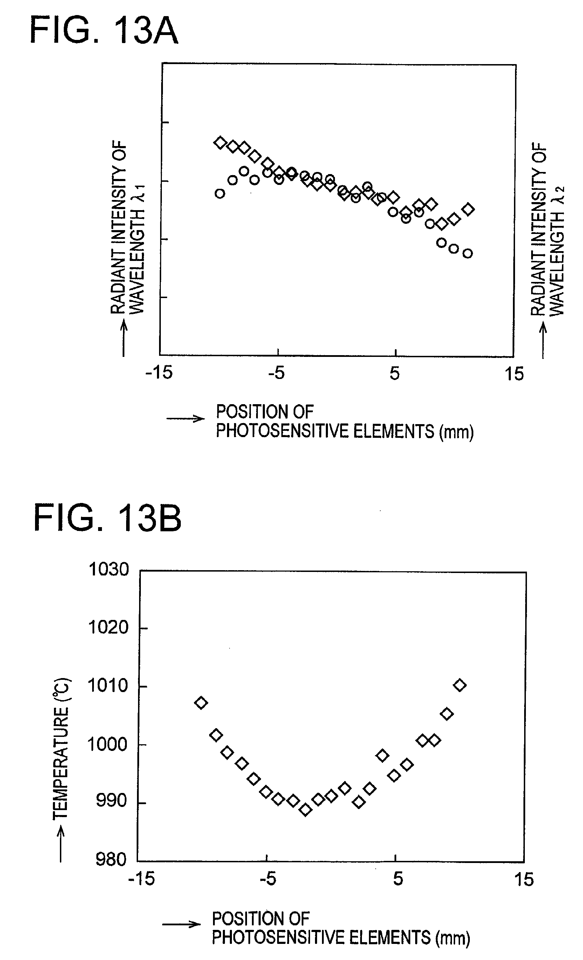

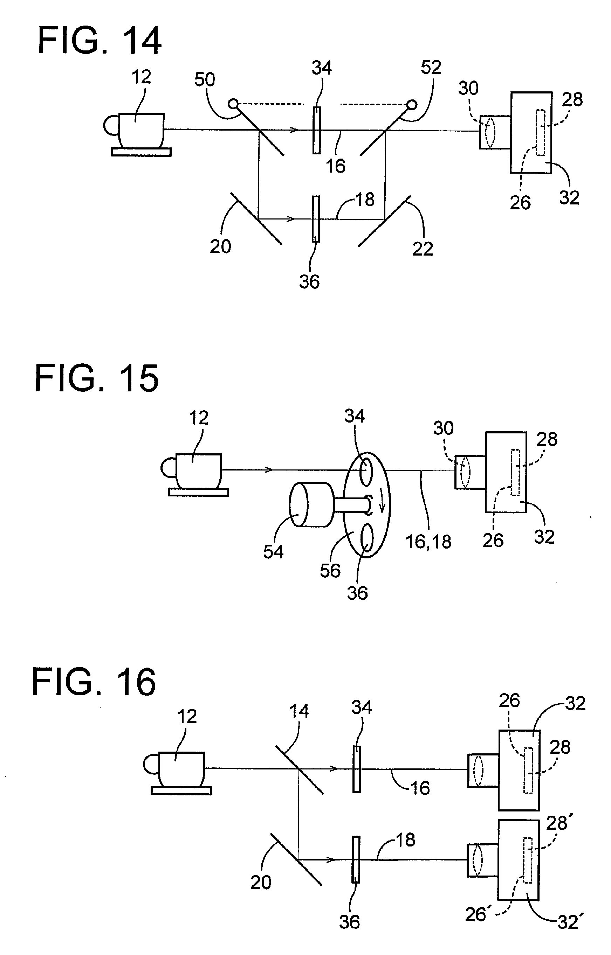

A first comparative experimentation was made under the same conditions as described above, by using a comparative optical system 1 which is identical with the above-described optical system, except in that the CCD camera of the image detector is constructed such that each pair of corresponding two photosensitive elements in the respective first and second photosensitive areas $B_1$ and $B_2$ on the light detecting surface 26 have a percentage of difference in light sensitivity of higher than 0.25%. This experimentation revealed the measurement of a surface temperature distribution of 1000°C±10°C of the alumina substrate, as indicated in Fig. 13B wherein the temperature values as detected at the photosensitive elements located at the end portions of the photosensitive areas $B_1$, $B_2$. This comparatively large variation of the temperature measurement was due to a distribution of the radiant intensity values of one of the first and second wavelengths $\lambda_1$ and $\lambda_2$ as represented by an upwardly convex curve, as distinguished from a distribution of the other wavelength as represented by a relatively straight inclined line, as indicated in Fig. 13A. In this comparative example, the accuracy of the temperature distribution was lowered to ±1% of the true temperature as represented by the output of the thermocouple. A second comparative experimentation was made under the same condition as in the first comparative experimentation, using a comparative optical system 2 shown in Fig. 16, which includes a pair of image detectors 32, 32', as described below. This second comparative experimentation revealed the measurement of a surface temperature distribution of the alumina substrate, the accuracy of which was further lowered to ±1.7% of the true temperature as represented by the output of thermocouple, due to the comparatively high difference percentage of the light sensitivity of the photosensitive elements in the first and second photosensitive areas.

In the present embodiment described above, the first and second images $G_1$ and $G_2$ of the object body 12 are respectively obtained with the first and second radiations which have the respective first and second wavelengths $\lambda_1$ and $\lambda_2$ and which are selected from the light emitted from the surface of the object body 12. These first and second radiations are respectively obtained by the respective first and second photosensitive

areas $B_1$ and $B_2$ of the image detector 32, which are constructed such that each pair of mutually corresponding first and second photosensitive elements in the respective first and second photosensitive areas, which corresponds to each pair of mutually corresponding two picture elements of the respective first and second images has a percentage of difference in light sensitivity of not higher than 0.25%. The temperature of the object body is calculated on the basis of the ratio of the radiant intensity values of the first and second radiations at each pair of mutually corresponding two picture elements of the first and second images. Since the percentage of difference in the light sensitivity of each pair of mutually corresponding first and second photosensitive elements corresponding to each pair of mutually corresponding two picture elements is adjusted to a value as low as not higher than 0.25% according to the present invention, the distribution of the surface temperature of the object body can be measured with high accuracy according to the present invention.

Further, the present embodiment is arranged such that the first filter 34 is operable to select the first radiation having the first wavelength $\lambda_1$ from the light emitted from the surface of the object body 12, such that the first filter 34 permits transmission therethrough of the first radiation having the first wavelength $\lambda_1$ which is selected according to a radiant-intensity curve corresponding to a wavelength of a black body at a lower limit of the range of the temperature to be measured, and which is within a high radiant intensity range in which the radiant intensity is higher than a radiant intensity at a normal room temperature. The first filter 34 is arranged to permit the first radiation to be transmitted therethrough to the first photosensitive area $B_1$ on the light detecting surface 26. On the other hand, the second filter 36 is operable to select the second radiation having the second wavelength $\lambda_2$ from the light emitted from the surface of the object body 12, such that the second filter 36 permits transmission therethrough of the second radiation having the second wavelength $\lambda_2$ which is selected within the high radiant intensity range, such that the second wavelength $\lambda_2$ is different from the first wavelength $\lambda_1$ by a predetermined difference which is not larger than 1/12 of the first wavelength $\lambda_1$ and which is not smaller than a sum of a half width of the first wavelength $\lambda_1$ and a half width of the second wavelength $\lambda_2$. The second filter 36 is arranged to permit the second radiation to be transmitted to the second photosensitive area $B_2$ on the light detecting surface 26. The present embodiment is arranged to calculate the temperature $T_{ij}$ of the object body 12 at each picture element of its image, on the basis of the radiant intensity ratio $R_{ij}$ at each pair of mutually corresponding two picture elements of the first and second images $G_1$ and $G_2$ obtained with the respective first and second radiations of the first and second wavelengths $\lambda_1$ and $\lambda_2$ selected from the light emitted from the surface of the object body 12. Thus, the distribution of the surface temperature of the object body 12 is measured on the basis of the temperature $T_{ij}$ at each picture element. To select the first radiation having the first wavelength $\lambda_1$ from the light emitted from the surface of the object body 12, the optical system of the present embodiment uses the first filter 34 which permits transmission therethrough of the radiation having the first wavelength $\lambda_1$ which is selected according to the radiant-intensity curve L1 corresponding to the wavelength of the black body at the substantially lower limit of the range of the temperature to be measured, and which is within a high radiant intensity range in which the radiant intensity is higher than the background radiant intensity $E_{BG}$ at a normal room temperature. The optical system further uses the second filter 26 which permits transmission therethrough of the second radiation having the second wavelength $\lambda_2$ which is selected within the above-indicated high radiant intensity range, such that the second wavelength $\lambda_2$ is different from the first wavelength $\lambda_1$ by a predetermined difference which is not larger than 1/12 of the first wavelength $\lambda_1$ and which is not smaller than a sum of a half width $\Delta\lambda_1$ of the first wavelength $\lambda_1$ and a half width $\Delta\lambda_2$ of the second wavelength $\lambda_2$. Accordingly, optical signals having sufficiently high radiant intensities can be obtained, leading to an accordingly high S/N ratio of the image detector 32. In addition, the first and second wavelengths $\lambda_1$ and $\lambda_2$ are close to each other, so that the principle of measurement of the present optical system fully matches the principle of measurement of a dichotic thermometer, namely, fully meets a prerequisite that the dependency of the emissivity on the wavelength can be ignored for two radiations the wavelengths of which are close to each other, leading to approximation $\varepsilon_1 = \varepsilon_2$. Thus, the present measuring apparatus permits highly accurate measurement of the temperature distribution.

Further, the present embodiment is arranged such that the first filter 34 permits transmission therethrough of the first radiation having the half width $\Delta\lambda_1$ which is not larger than 1/20 of the first wavelength $\lambda_1$, while the second filter 36 permits transmission therethrough of the second radiation having the half width $\Delta\lambda_2$ which is not larger than 1/20 of the second wavelength $\Delta\lambda_2$, so that the radiations having these first and second wavelengths $\lambda_1$ and $\lambda_2$ are considered to exhibit a sufficient high degree of monocrhomatism. Accordingly, the present embodiment meets the prerequisite for the principle of measurement by a dichroic thermometer, resulting in improved accuracy of measurement of the temperature distribution.

In addition, the present embodiment is arranged such that the first and second filters 34, 36 have transmittance values whose difference is not higher than 30%, so that the present optical system has high sensitivity and S/N ratio, even for one of the two radiations of the first and second wavelengths $\lambda_1$ $\lambda_2$ which has a lower luminance value, permitting accurate measurement of the temperature distribution.

While one embodiment of this invention has been described above in detail by reference to the drawings, it is to be understood that the present invention may be otherwise embodied.

In the illustrated embodiment of Figs. 5-13, the temperature distribution measuring apparatus 10 is arranged to practice a dichroic measurement of temperature distribution using the first and second radiations which have the respective first and second wavelengths $\lambda_1$ and $\lambda_2$ corresponding to respective two colors and which are selected from the light emitted from the surface of the object body 12. However, the temperature distribution measuring apparatus according to the present invention may be arranged to measure the temperature distribution by using three or more wavelengths of light corresponding to respective colors.

Referring to Fig. 14, there is schematically illustrated an arrangement of a temperature distribution measuring apparatus according to another embodiment of this invention. In the embodiment of Fig. 14, a pair of mirrors 50, 52 are disposed such that each of these mirrors 50, 52 is pivotable about its fixed end between a first position indicated by broken line and a second position indicated by solid line. When the mirrors 50, 52 are placed in the first position, a light emitted from the surface of the object body 12 is incident upon the image detector 32 along the first optical path 16. When the mirrors 50, 52 are placed in the second position, the light is incident upon the image detector 32 along the second optical path 18. As in the preceding embodiment, the first optical path 16 is provided with the first filter 34, while the second optical path 18 is provided with the second filter 36, so that the first and second images $G_1$ and $G_2$ are formed by the respective two radiations having the respective first and second wavelengths $\lambda_1$ and $\lambda_2$, with a predetermined time difference. Thus, the present embodiment has the same advantage as the preceding embodiment.

In an embodiment shown in Fig. 15, a rotary disc 56 is disposed such that the rotary disc 56 is rotatable by an electric motor 54, about an axis which is parallel to an optical path extending between the object body 12 and the image detector 32 and which is offset from the optical path in a radial direction of the rotary disc 56, by a suitable distance. The rotary disc 56 carries the first filter 34 and the second filter 36 such that these first and second filters 34, 36 are selectively aligned with the optical path by rotation of the rotary disc 56 by the electric motor 54. The first image $G_1$ is formed with the radiation which has the first wavelength $\lambda_1$ and which has been transmitted through the first filter 34, and the second image $G_2$ is formed with the radiation which has the second wavelength $\lambda_2$ and which has been transmitted through the second filter 36. These first and second images $G_1$ and $G_2$ are successively obtained by rotating the rotary disc 56. Thus, the present embodiment has the same advantages as the preceding embodiments. In the present embodiment, the first optical path 16 and the second optical path 18 are considered to be selectively established between the rotary disc 56 and the image detector 32.

In an embodiment of Fig. 16, the light emitted from the surface of the object body 12 is split by the half mirror 14 into a first component traveling along the first optical path 16 and a second component traveling along the second optical path 18. The first optical path 16 is provided with the first filter 34, and the first component which has been transmitted through the first filter34 is incident upon the image detector 32. On the other hand, the second optical path 16 is provided with the second filter 36, and the second component which has been transmitted through the second filter 36 is incident upon another image detector 32'. The first and second filters 34, 36 may be incorporated within the respective image detectors 32, 32'. In the present embodiment, too, the first image $G_1$ is formed with the radiation having the first wavelength $\lambda_1$ which is selected from the light emitted from the surface of the object body 12, as a result of transmission of the light through the first filter 34, and at the same time the second image $G_2$ is formed with the radiation having the second wavelength $\lambda_2$ which is selected from the light from the object body 12 as a result of transmission of the light through the second filter 36. Thus, the present embodiment has a result of experimentation as obtained in the first embodiment of Fig. 5.

In the illustrated embodiments, the first and second wavelengths $\lambda_1$ and $\lambda_2$ are selected according to the radiant-intensity curve L1 of Fig. 6 corresponding to the wavelength of the black body at the lower limit of the range of the temperature to be measured, and which is within a high radiant intensity range in which the radiant intensity is at least three times the background radiant intensity $E_{BG}$ at a normal room temperature. However, the radiant intensity need not be at least three times the background radiant intensity $E_{BG}$, since the principle of the present invention is satisfied as long as the radiant intensity is sufficiently higher than the background radiant intensity $E_{BG}$ at the normal room temperature.

In the illustrated embodiments, the half width $\Delta\lambda_1$ of the first wavelength $\lambda_1$ is equal to or smaller than 1/20 of the first wavelength $\lambda_1$, and the half width $\Delta\lambda_2$ of the second wavelength $\lambda_2$ is equal to or smaller than 1/20 of the second wavelength $\lambda_2$. However, the half widths need not be equal to or smaller than 1/20 of the wavelength values, but may be slightly larger than 1/20 of the wavelength values, according to the principle of the invention.

In the illustrated embodiments, a difference of the transmittance values of the first and second filters 34, 36 is equal to or smaller than 30%. However, the difference need not be equal to or smaller than 30%, but may be slightly larger than 30%, according to the principle of the invention.

Although the surface temperature of the object body 12 is indicated in different colors in step S4 of Fig.

9, the surface temperature may be indicated in any other fashion, for example, by contour lines or in different density values.

While the image detector 32, 32' used in the illustrated embodiments uses the CCD device 28 having the light detecting surface 26, the image detector may use any other light sensitive element such as a color imaging tube.

Although the photosensitive elements arranged on the light detecting surface 26 correspond to respective picture elements of the images $G_1$ and $G_2$, each photosensitive element need not correspond to one picture element, but may correspond to one set of a plurality of adjacent or successive picture elements. In the latter case, too, however, each pair of mutually corresponding two photosensitive elements in the respective first and second photosensitive areas $B_1$, $B_2$ corresponds to each pair of mutually corresponding two local portions of the respective first and second images $G_1$, $G_2$.

It is to be understood that the relationship between the radiant intensity ratio R and the temperature T as represented by a curve indicated in Fig. 10 is only an example where the radiant intensity ratio $R_{ij}$ is represented by $E_{1ij}/E_{2ij}$ ($= E_{600}/E_{650}$). Where the ratio Rij is represented by $E_{2ij}/E_{1ij}$, the relationship is represented by a curve which is inclined such that the temperature T decreased with a decrease in the radiant intensity ratio R, contrary to the curve of Fig. 10.

It is to be understood that the present invention may be embodied with various other changes, modifications and improvements, which may occur to those skilled in the art, in the light of the technical teachings of the present invention which have been described.

**Claims**

1. A method of measuring a surface temperature of an object body, by calculating a temperature of the object body at each local portion of its image on the basis of a radiant intensity ratio at each pair of mutually corresponding two local portions of a first and a second image which are obtained by respective first and second photosensitive areas of an image detector, which detect respective first and second radiations which have respective first and second wavelengths and which are selected from a light emitted from a surface of said object body, **characterized by** comprising:

   steps of obtaining said first and second images of said object body (12) respectively by said first and second photosensitive areas (26, $B_1$, $B_2$) of said image detector (32; 32') which are constructed such that each pair of mutually corresponding two photosensitive elements in said first and second photosensitive elements, which corresponds to each pair of mutually corresponding two local portions of said respective first and second images ($G_1$, $G_2$), has a percentage of difference in light sensitivity of not higher than 0.25%.

2. A method according to claim 1, **characterized in that** said step of obtaining said first and second images comprise:

   a first wavelength-selecting step of selecting said first radiation having said first wavelength from the light emitted from the surface of said object body (12), by using a first filter (34) which permits transmission therethrough of said first radiation having said first wavelength which is selected according to a radiant-intensity curve corresponding to a wavelength of a black body at a lower limit of a range of the temperature to be measured, and which is within a high radiant intensity range in which the radiant intensity is higher than a radiant intensity at a normal room temperature, said first filter permitting said first radiation to be transmitted therethrough to said first photosensitive area (26, $B_1$); and
   a second wavelength-selecting step of selecting said radiation having said second wavelength from the light emitted from the surface of said object body, by using a second filter (36) which permits transmission therethrough of said second radiation having said second wavelength which is selected within said high radiant intensity range, such that said second wavelength is different from said first wavelength by a predetermined difference which is not larger than 1/12 of said first wavelength and which is not smaller than a sum of a half width of said first wavelength and a half width of said second wavelength, said second filter permitting said second radiation to be transmitted therethrough to said second photosensitive area (26, $B_2$).

3. A method according to claim 2, **characterized in that** said first filter (34) permits transmission therethrough of a radiation having a half width which is not larger than 1/20 of said first wavelength, while said second filter (36) permits transmission therethrough of a radiation having a half width which is not larger than 1/20 of said second wavelength.

4. A method according to claim 2 or 3, **characterized in that** said first and second filters (34, 36) have transmittance values whose difference is not higher than 30%

5. An apparatus for measuring a surface temperature of an object body, by calculating a temperature of the object body at each local portion of its image on the basis of a radiant intensity ratio at each pair of mutually corresponding two local portions of a first and a second image which are obtained by respective first and second photosensitive areas of an image detector, which detect respective first and second radiations which have respective first and second wavelengths and which are selected from a light emitted from a surface of said object body, said first photosensitive area having a plurality of first photosensitive elements arranged to obtain said first image ($G_1$) of said object body (12) with said first radiation having said first wavelength ($\lambda_1$), while said second photosensitive area having a plurality of second photosensitive elements arranged to obtain said second image ($G_2$) of said object body with said second radiation having said second wavelength ($\lambda_2$), **characterized in that**:

said image detector (32; 32') is constructed such that each pair of mutually corresponding first and second photosensitive elements in said first and second photosensitive areas (26, $B_1$, $B_2$), which corresponds to each pair of mutually corresponding two local portions of said respective first and second images of said object body, has a percentage of difference in light sensitivity of not higher than 0.25%, wherein said percentage of difference is represented by $[(S_1 - S_2)/S_0] \times 100$, where "$S_0$", "$S_1$" and "$S_2$" respectively represent an average light sensitivity of all of said first plurality of photosensitive elements and said second plurality of photosensitive elements, and light sensitivity values of said first and second photosensitive elements of said each pair.

6. An apparatus according to claim 5, **characterized by** comprising:

a first filter (34) operable to select said first radiation having said first wavelength from the light emitted from the surface of said object body (12), said first filter permitting transmission therethrough of said first radiation having said first wavelength which is selected according to a radiant-intensity curve corresponding to a wavelength of a black body at a lower limit of a range of the temperature to be measured, and which is within a high radiant intensity range in which the radiant intensity is higher than a radiant intensity at a normal room temperature, said first filter permitting said first radiation to be transmitted therethrough to said first photosensitive area (26, $B_1$); and
a second filter (36) operable to select said second radiation having said second wavelength from the light emitted from the surface of said object body, said second filter permitting transmission therethrough of said second radiation having said second wavelength which is selected within said high radiant intensity range, such that said second wavelength is different from said first wavelength by a predetermined difference which is not larger than 1/12 of said first wavelength and which is not smaller than a sum of a half width of said first wavelength and a half width of said second wavelength, said second filter permitting said second radiation to be transmitted therethrough to said second photosensitive area (26, $B_2$).

7. An apparatus according to claim 6, **characterized in that** said first filter (34) permits transmission therethrough of a radiation having a half width which is not larger than 1/20 of said first wavelength, while said second filter (36) permits transmission therethrough of a radiation having a half width which is not larger than 1/20 of said second wavelength.

8. An apparatus according to claim 6 or 7, **characterized in that** said first and second filters (34, 36) have transmittance values whose difference is not higher than 30%.

9. An apparatus according to any one of claims 6-8, **characterized by** further comprising:

a first half mirror (14) for splitting said light emitted from the surface of said object body (12) into two components traveling along respective first and second optical paths (16, 18) which are provided with said first and second filters (34, 36), respectively;
a second half mirror (24) disposed so as to receive the radiations of said first and second wavelengths from said first and second filters; and
and an image detector (32) including a multiplicity of photosensitive elements operable in response to the radiations of said first and second wavelengths, to form two images of said object body on the basis of said radiations of said first and second wavelengths, respectively, such that said two images are spaced apart from each other.

10. An apparatus according to any one of claims 6-8, **characterized by** further comprising:

a pair of mirrors (50, 52) each movable between a first position in which the light emitted from the surface of said object body (12) travels along a first path (16) provided with said first filter (34), and a second position in which a corresponding one of said pair of mirrors reflects said light such that the light travels along a second optical path (28) provided with said second filter (36); and

an image detector (32) including a multiplicity of photosensitive elements operable in response to the radiations of said first and second wavelengths, to form two images of said object body on the basis of said radiations of said first and second wavelengths, respectively, such that said two images are spaced apart from each other.

**11.** An apparatus according to any one of claims 6-8, **characterized by** further comprising:

a rotary disc (56) carrying said first and second filters (34, 36) fixed thereto and rotatable about an axis parallel to an optical path (16,18) which extends from said object body (12), said first and second filters being disposed on said rotary disc such that said first and second filters (34, 36) are selectively aligned with said optical path, by rotation of said rotary disc;

an electric motor (54) operable to rotate said rotary disc; and

an image detector (32) including a plurality of photosensitive elements operable in response to the radiations of said first and second wavelengths, to form two images of said object body on the basis of said radiations of said first and second wavelengths, respectively, such that said two images are spaced apart from each other.

**12.** An apparatus according to any one of claims 6-8, **characterized by** further comprising:

a half mirror (14) for splitting said light emitted from the surface of said object body (12) into two components traveling along respective first and second optical paths (16, 18) which are provided with said first and second filters (34, 36), respectively; and

a pair of image detectors (32, 32') disposed to receive the radiations of said first and second wavelengths, respectively, each of said pair of image detectors including a multiplicity of photosensitive elements operable in response to a corresponding one of the radiations of said first and second wavelengths, to an image of said object body on the basis of said corresponding radiation.

# FIG. 1

FIRST PHOTOSENSITIVE AREA

SENSITIVITY

POSITION OF
PHOTOSENSITIVE ELEMENTS

# FIG. 2

SECOND PHOTOSENSITIVE AREA

SENSITIVITY

POSITION OF
PHOTOSENSITIVE ELEMENTS

# FIG. 3A

# FIG. 3B

# FIG. 4A

RADIANT INTENSITY
(INCIDENT LIGHT INTENSITY)

λ₁

λ₂

POSITION OF
PHOTOSENSITIVE ELEMENTS

# FIG. 4B

TEMPERATURE

POSITION OF
PHOTOSENSITIVE ELEMENTS

# FIG. 5

# FIG. 6

# FIG. 7

# FIG. 8

# FIG. 9

S1 | READING RADIANT INTENSITY VALUES $E_{1ij}$ AND $E_{2ij}$ AT RESPECTIVE PICTURE ELEMENTS OF TWO IMAGES

S2 | CALCULATING RADIANT INTENSITY RATIO $R_{ij}$ OF EACH PAIR OF CORRESPONDING PICTURE ELEMENTS

S3 | CALCULATING TEMPERATURE $T_{ij}$ AT EACH PAIR OF CORRESPONDING PICTURE ELEMENTS

S4 | DISPLAYING AN IMAGE OF OBJECT BODY IN VARIOUS COLORS INDICATIVE OF TEMPERATURE VALUES $T_{ij}$ AT RESPECTIVE PICTURE ELEMENTS

# FIG. 10

RADIANT INTENSITY RATIO R

TEMPERATURE T(°C)

## FIG. 11

# FIG. 12A

RADIANT INTENSITY OF WAVELENGTH $\lambda_1$

RADIANT INTENSITY OF WAVELENGTH $\lambda_2$

POSITION OF PHOTOSENSITIVE ELEMENTS (mm)

# FIG. 12B

TEMPERATURE (℃)

POSITION OF PHOTOSENSITIVE ELEMENTS (mm)

# FIG. 13A

# FIG. 13B

# FIG. 14

# FIG. 15

# FIG. 16